# FASCICULE DE BREVET EUROPEEN

(11) **EP 1 837 234 B1**
(45) Date de publication et mention de la délivrance du brevet: **30.06.2010**
(21) Numéro de dépôt: 07290329.7
(22) Date de dépôt: 19.03.2007
(51) Int. Cl.: B60P 1/44, B60P 1/00, B60P 3/00

(54) **Dispositif d'embarquement et de débarquement d'un module mobile d'un véhicule**
Vorrichtung zum Be- und Entladen eines mobilen Moduls von einem Fahrzeug
Device for loading and unloading a mobile module from a vehicle

(30) Priorité: 23.03.2006 FR 0602517
(43) Date de publication de la demande: 26.09.2007
(73) Titulaire: NEXTER Systems, 42328 Roanne Cedex (FR)
(72) Inventeur: Germenot, Olivier, 78000 Versailles (FR)
(74) Mandataire: Célanie, Christian

(56) Documents cités:
- DE-A1- 1 800 876
- DE-A1- 3 739 267
- DE-U1- 9 106 171
- DE-U1- 9 419 833
- DE-U1- 29 807 108
- FR-A1- 2 491 016
- FR-A1- 2 831 862
- US-A- 4 729 444

## Description

Le secteur technique de la présente invention est celui des dispositifs équipant des véhicules du type militaire ou de génie civil et permettant l'embarquement et le débarquement d'un module mobile. Un tel dispositif est connu du document US-4729444.

L'utilisation de modules mobiles est fréquente lors d'opérations militaires, de génie civil ou de sécurité civile. Ces modules mobiles sont de taille réduite et se présentent généralement sous la forme de robots équipés de roues ou de chenilles et comportant par exemple une caméra, des pinces, des outils de mesure ou encore des moyens de télécommunication. On emploie généralement de tels modules en remplacement d'un opérateur humain lorsque la configuration du lieu d'intervention ne permet pas le passage d' un humain (opérations de secours après un séisme, maintenance de conduites d'eaux usées) ou lorsque la mission à réaliser présente un risque létal (opérations de déminage, opérations dans une zone de tirs, risques NRBC,...). Ces modules mobiles sont donc acheminés par véhicule jusqu'à la zone où ils doivent réaliser leur mission et commandés depuis un véhicule situé à proximité (généralement le véhicule les ayant acheminés sur place).

Un risque majeur lors de l'utilisation de tels modules dans une zone à risque réside dans l'exposition des opérateurs lors de la mise à poste du dispositif mobile.

Un inconvénient que présentent de tels modules réside également dans leur encombrement à l'intérieur du véhicule.

Un autre inconvénient que présentent ces modules réside dans leur fragilité, ce qui interdisait jusqu'à présent leur stockage à l'extérieur du véhicule où ils étaient exposés à des agressions (mines à effet de souffle, projectiles, chutes de pierres).

Le but de la présente invention est de fournir un dispositif de transport d'un module mobile à bord d'un véhicule, dispositif assurant la protection du module et permettant son débarquement sans intervention humaine.

L'invention a donc pour objet un dispositif d'embarquement et de débarquement d'un module mobile à partir d'un véhicule, caractérisé en ce qu'il comporte une enceinte de stockage du module disposée à l'extérieur du véhicule et des moyens de support et de déplacement de l'enceinte solidaires de la caisse du véhicule et permettant de déplacer l'enceinte entre une position de transport et une position de débarquement du module, l'enceinte de stockage étant réalisée sous la forme d'une boîte parallélépipédique ou bien sous la forme d'un plateau se logeant dans un caisson en comportant un fond orienté vers l'extérieur du véhicule lorsque l'enceinte est en position de transport, ledit fond comportant un blindage de protection contre les agressions du type mine à effet de souffle ou projectile.

Selon une caractéristique de l'invention, les moyens de support et de déplacement de l'enceinte sont des bras mobiles et un ou plusieurs vérins.

Selon une autre caractéristique de l'invention, une extrémité des bras mobiles est reliée à la caisse du véhicule au moyen d'un pivot ou d'une rotule et l'autre extrémité des bras mobiles est reliée à l'enceinte de stockage au moyen d'un pivot ou d'une rotule.

Selon encore une autre caractéristique de l'invention, les moyens de déplacement de l'enceinte sont des bras disposés "en parallélogramme" afin de maintenir l'enceinte dans une position sensiblement horizontale lors de son déplacement.

Selon une autre caractéristique de l'invention, les moyens de déplacement de l'enceinte sont des bras disposés "en Y" afin de déplacer l'enceinte d'une position de transport, sensiblement verticale à une position de débarquement du module, sensiblement horizontale.

Selon une autre caractéristique de l'invention, le dispositif d'embarquement et de débarquement est intégré sous le véhicule.

Selon une autre caractéristique de l'invention, le dispositif d'embarquement et de débarquement est disposé à l'arrière du véhicule.

Selon une autre caractéristique de l'invention, le dispositif d'embarquement et de débarquement comporte des moyens de verrouillage assurant le maintien en position de l'enceinte.

Selon une autre caractéristique de l'invention, l'enceinte comporte une interface de connexion avec le module embarqué.

Selon une autre caractéristique de l'invention, l'enceinte de stockage comporte des moyens de maintien du module mobile.

Un tout premier avantage du dispositif selon l'invention réside dans la possibilité d'embarquer un module, sans perte de volume utile à l'intérieur du véhicule.

Un autre avantage réside dans le fait que les opérations d'embarquement et le débarquement du module peuvent se faire depuis l'intérieur du véhicule.

Un autre avantage réside dans le fait que le dispositif peut comporter un blindage assurant la protection du véhicule et du module.

Un autre avantage réside dans le positionnement du dispositif à l'arrière ou en dessous du véhicule, permettant de rendre peu visible les opérations d'embarquement ou de débarquement du module.

D'autres caractéristiques, détails et avantages de l'invention ressortiront plus clairement de la description donnée ci-après à titre indicatif en relation avec des dessins dans lesquels :
- la figure 1 représente un exemple de réalisation d'une enceinte de stockage d'un module mobile,
- la figure 2 représente un exemple de réalisation dés moyens de support et de déplacement de l'enceinte,
- les figures 3a à 3c illustrent un mode de déplacement de l'enceinte, et
- les figures 4 et 5 illustrent un autre mode de réalisation et de déplacement de l'enceinte.

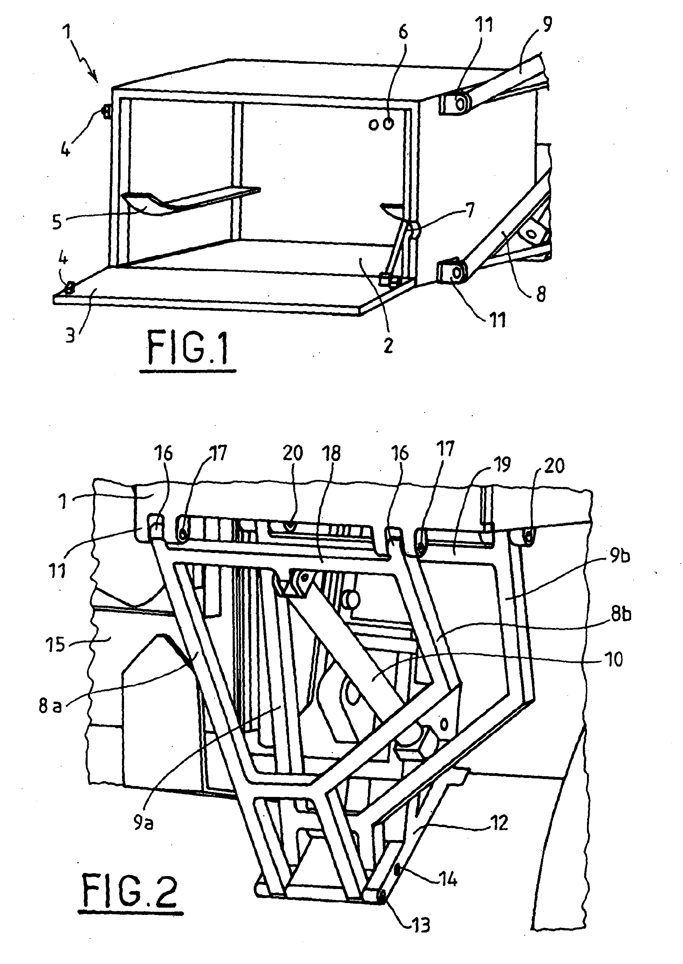

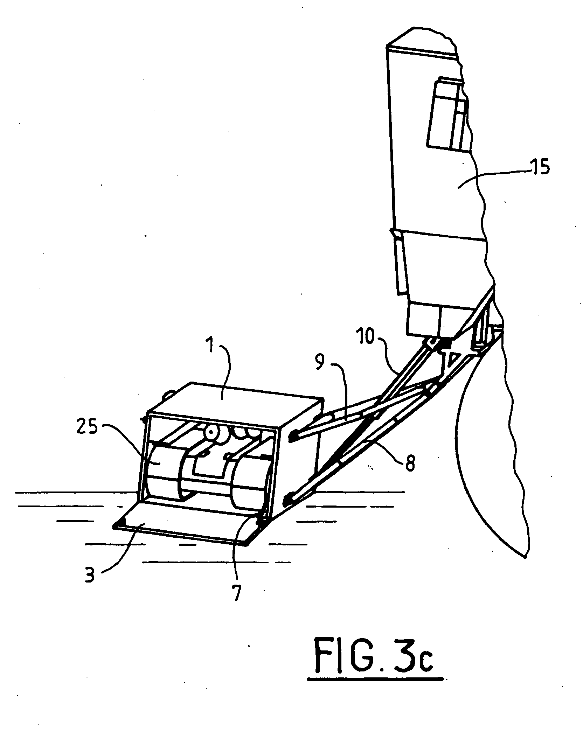

La figure 1 illustre un exemple de réalisation d'une enceinte 1 de stockage d'un module mobile destinée à être disposée à l'extérieur d'un véhicule. Cette enceinte se présente sous la forme d'une boîte parallélépipédique comportant un fond 2 et un couvercle 3 articulé et actionné par un vérin 7 pouvant être verrouillé par des moyens de fermeture 4. A l'intérieur de cette enceinte, des moyens 5 de maintien du module mobile assurent l'immobilisation dudit mobile. Dans cet exemple de réalisation, les moyens de maintien sont des réglettes 5 permettant le maintien des roues ou des chenilles du module lors des opérations d'embarquement ou de débarquement (comme il est visible sur la figure 3c).

L'enceinte 1 comporte également une interface 6 de connexion avec le module embarqué. Cette interface est un connecteur permettant d'alimenter le module mobile en électricité et/ou d'échanger des informations telles qu'un plan de mission à effectuer ou des données récoltées par le module mobile (par exemple des images). On pourra également prévoir une interface 6 assurant une liaison sans fil avec le module pour permettra l'échange de données. On pourra également prévoir une liaison filaire en mettant en oeuvre des moyens enrouleurs de câble.

Un côté de l'enceinte 1 comporte des ergots 11 permettant de fixer l'enceinte à des bras mobiles 8 et 9 constituant des moyens de support et de déplacement de l'enceinte.

La figure 2 illustre un exemple de réalisation des moyens de support et de déplacement de l'enceinte 1. Dans cet exemple de réalisation, l'enceinte 1 est supportée par des bras 8 et 9. Les bras 8 et 9 comportent chacun deux branches 8a,8b ; 9a,9b dont une extrémité 16 est disposée entre deux ergots 11 de l'enceinte 1. Les ergots 11 et les extrémités 16 des branches comportent des perçages dans lesquels sont disposés des axes 17 et 20 permettant de réaliser une liaison pivot. Les autres extrémités des bras 8 et 9 sont reliées à un support 12, solidaire de la caisse 15 du véhicule, au moyen d'axes 13 et 14 afin de réaliser une liaison pivot. Des barres transversales 18 et 19 relient les deux branches de chaque bras. Un vérin 10 est disposé entre la caisse 15 du véhicule et une barre transversale 18 de l'un des bras 8. Ce vérin permet de maintenir en place et de déplacer l'enceinte 1 selon un mode de fonctionnement décrit par la suite. On disposera préférentiellement des liaisons du type rotule entre le vérin 10 et le support 12 et entre le vérin 10 et l'enceinte 1.

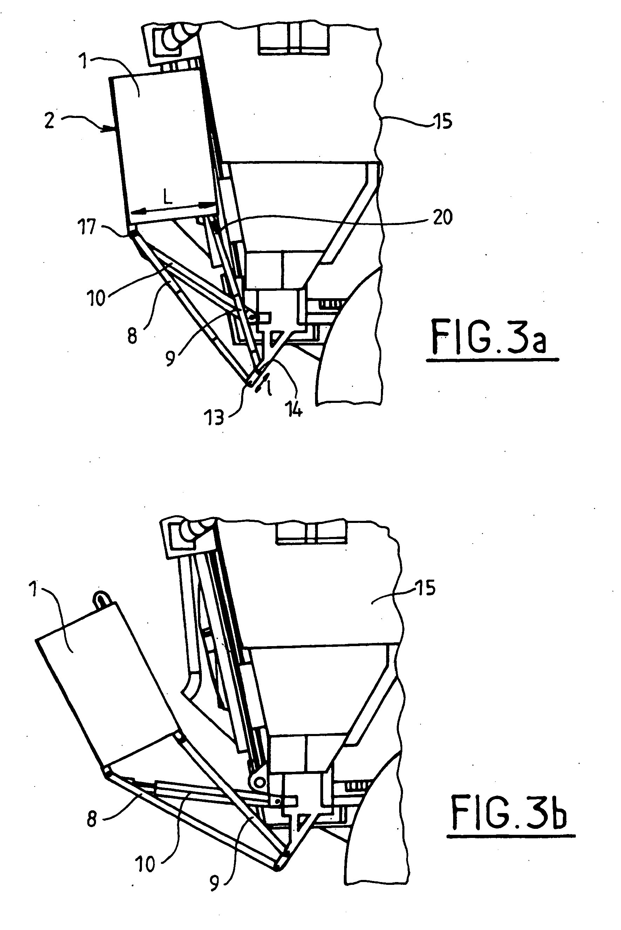

Les figures 3a à 3c illustrent le mode de déplacement de l'enceinte 1 supportée par les bras 8 et 9 décrits précédemment. La figure 3a représente l'enceinte 1 en position de transport, sensiblement verticale, la figure 3b représente l'enceinte 1 en position intermédiaire et la figure 3c représente l'enceinte 1 en position de débarquement du module, sensiblement horizontale.

On peut distinguer sur ces figures que les bras 8 et 9 sont disposés "en Y"; c'est-à-dire que l'entraxe 1 (visible figure 3a) entre les axes 13 et 14 de fixation des bras sur le support 12 est inférieur à l'entraxe L (visible figure 3a) entre les axes 17 et 20 de fixation des bras sur l'enceinte 1. Une telle réalisation permet avantageusement de transformer le mouvement de translation du vérin 10 en un déplacement de l'enceinte 1 d'une position de transport, sensiblement verticale à une position de débarquement du module, sensiblement horizontale. On entend par "position sensiblement verticale" une orientation de l'enceinte 1 proche de celle de la paroi de la caisse 15 du véhicule contre laquelle elle est disposée en position de transport. Ainsi, en fonction de la géométrie du dispositif, cette position pourra présenter une inclinaison permettant à l'enceinte 1 d'être plaquée sur l'arrière du véhicule et suivant une orientation qui pourra être proche d'un plan vertical. On entend par "position sensiblement horizontale" une position de l'enceinte 1 non inclinée (ou faiblement) permettant l'embarquement et le débarquement du module. Ainsi, en fonction de la configuration du terrain ou de la géométrie du dispositif, cette position pourra présenter une inclinaison de ±5° par rapport à un plan horizontal.

On remarquera sur la figure 3c que lorsque l'enceinte 1 est en position de débarquement du module, le vérin 7 actionne l'ouverture du couvercle 3, jusqu'à ce qu'il soit en contact avec le sol et permette le débarquement du module 25.

On remarquera également sur la figure 3a que le fond 2 de l'enceinte 1 est orienté vers l'extérieur du véhicule lorsque celle-ci est en position de transport. Ce fond 2 est donc particulièrement exposé aux agressions du type mine à effet de souffle ou projectile. Afin de protéger le module contre ces agressions, on munira donc ce fond 2 d'un blindage de protection contre les agressions du type mine à effet de souffle ou projectile. Ainsi, la protection du module est renforcée vis à vis des menaces (mines et projectiles) car les bras assurent un positionnement du module à distance du sol et au niveau de l'arrière du véhicule.

Avantageusement, ce mode de réalisation permet d'adapter le dispositif à différents types de véhicules. Il suffit pour cela de modifier les bras et/ou le support de module.

Le positionnement du module relevé permet aussi de faciliter un passage à gué du véhicule sans perturbation pour le module. L'enceinte contenant le module pourra par ailleurs être étanche.

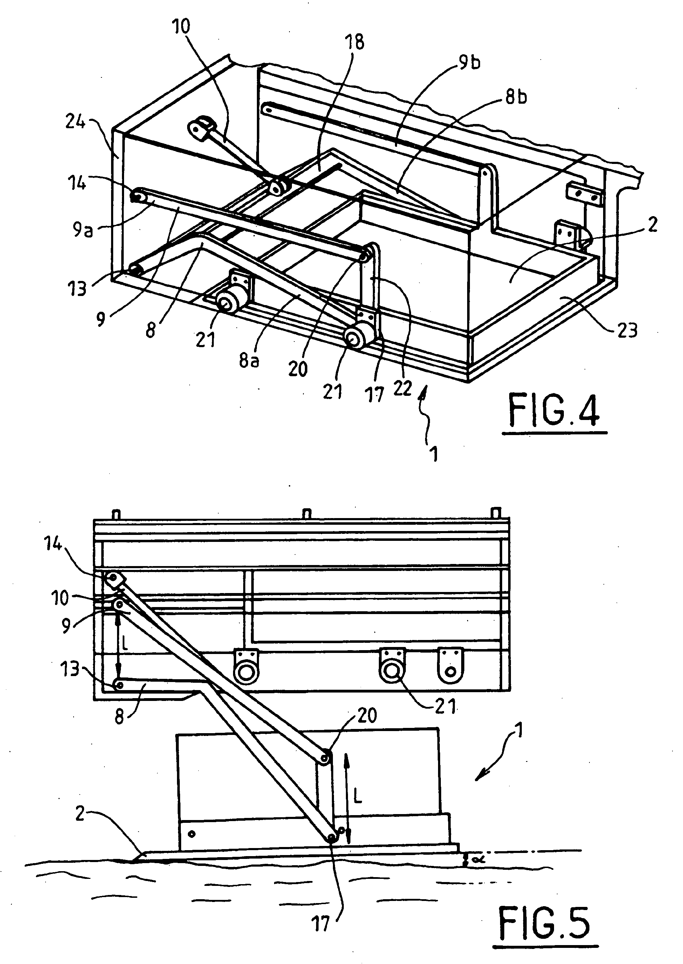

La figure 4 est une vue en perspective illustrant un autre exemple de réalisation d'une enceinte et de ses moyens de support et de déplacement dans une position de transport du module.

Dans cet exemple de réalisation, le dispositif d'embarquement et de débarquement du module mobile est intégré sous le véhicule et les moyens de déplacement de l'enceinte sont des bras disposés "en parallélogramme" afin de maintenir l'enceinte dans une position sensiblement horizontale lors de son déplacement.

Dans cet exemple de réalisation, l'enceinte 1 est disposée sous le véhicule, par exemple dans un caisson 24 pouvant être un caisson de protection contre les mines à effet de souffle. L'enceinte 1 est également supportée par des bras 8 et 9. Les bras 8 et 9 comportent chacun deux branches 8a,8b ; 9a,9b dont une de leurs extrémités est reliée par des axes 17 et 20 à l'enceinte 1. Les autres extrémités des bras 8 et 9 sont reliées à la caisse du véhicule, au moyen d'axes 13 et 14. Une barre transversale 18 relie les deux branches 8a et 8b du bras 8. Un vérin 10 est disposé entre la caisse du véhicule et la barre transversale 18. Ce vérin permet de maintenir en place et de déplacer l'enceinte 1. Des moyens 21 de verrouillage assurant le maintien en position de l'enceinte 1.

On remarquera que dans ce mode de réalisation, l'enceinte 1 ne se présente plus sous la forme d'une boîte rectangulaire mais d'un plateau comprenant un fond 2 et trois rebords 23. Deux rebords opposés comportent chacun un bras vertical 22 permettant la solidarisation avec le bras supérieur 9.

La figure 5 est une vue de profil illustrant le même exemple de réalisation de l'invention que celui représenté par la figure 4 mais dans une position de débarquement du module. Dans cette position, les moyens 21 de verrouillage assurant le maintien en position de l'enceinte 1 ont été déverrouillés et le plateau supportant le module a subi une translation vers le bas jusqu'à ce que le fond 2 de l'enceinte soit en contact avec le sol et se trouve dans une position sensiblement horizontale permettant de débarquer le module.

On peut distinguer sur cette figure que les bras 8 et 9 sont disposés "en parallélogramme"; c'est-à-dire que l'entraxe 1 entre les axes 13 et 14 de fixation des bras sur la caisse du véhicule est de longueur égale à l'entraxe L entre les axes 17 et 20 de fixation des bras sur l'enceinte 1 et les bras 8 et 9 sont de même longueur (indépendamment de leurs géométries différentes, pour chaque bras, les distances entre l'axe de fixation sur la caisse du véhicule et l'axe de fixation de l'enceinte 1 sont .égales). Une telle réalisation permet avantageusement de transformer le mouvement de translation du vérin 10 en une translation de l'enceinte 1, par exemple dans le sens vertical.

Avantageusement, un léger décalage au niveau du pivot 17 permet d'obtenir une faible inclinaison ∝ du fond 2 au moment ou ce dernier touche le sol. Ainsi, en cas d'irrégularité du terrain, la marche à monter ou descendre par le module sera réduite.

Dans ces exemples de réalisation, les extrémités des bras mobiles 8 et 9 sont reliées à la caisse 15 du véhicule au moyen de pivots 13 et 14 et à l'enceinte 1 de stockage au moyen de pivots 17 et 20. On pourra également réaliser l'invention en remplaçant ces pivots par des rotules.

## Revendications

1. Dispositif d'embarquement et de débarquement d'un module mobile téléopérable à partir d'un véhicule, **caractérisé en ce qu'**il comporte une enceinte de stockage (1) du module disposée à l'extérieur du véhicule et des moyens (8,9,10) de support et de déplacement de l'enceinte (1) solidaires de la caisse (15) du véhicule et permettant de déplacer l'enceinte (1) entre une position de transport et une position de débarquement du module (25), l'enceinte de stockage étant réalisée sous la forme d'une boîte parallélépipédique ou bien sous la forme d'un plateau se logeant dans un caisson en comportant un fond (2) orienté vers l'extérieur du véhicule lorsque l'enceinte est en position de transport, ledit fond (2) comportant un blindage de protection contre les agressions du type mine à effet de souffle ou projectile.

2. Dispositif d'embarquement et de débarquement d'un module mobile selon la revendication 1, **caractérisé en ce que** les moyens de support et de déplacement de l'enceinte sont des bras mobiles (8, 9) et au moins un vérin (10).

3. Dispositif d'embarquement et de débarquement d'un module mobile selon la revendication 2, **caractérisé en ce qu'**une extrémité des bras mobiles (8, 9) est reliée à la caisse (15) du véhicule au moyen d'un pivot (13;14) ou d'une rotule et que l'autre extrémité (16) des bras mobiles (8, 9) est reliée à l'enceinte (1) de stockage au moyen d'un pivot (17 ; 20) ou d'une rotule.

4. Dispositif d'embarquement et de débarquement d'un module mobile selon la revendication 3, **caractérisé en ce que** les moyens de déplacement de l'enceinte sont des bras disposés "en parallélogramme" afin de maintenir l'enceinte dans une position sensiblement horizontale lors de son déplacement.

5. Dispositif d'embarquement et de débarquement d'un module mobile selon la revendication 3, **caractérisé en ce que** les moyens de déplacement de l'enceinte sont des bras (8, 9) disposés "en Y" afin de déplacer l'enceinte d'une position de transport, sensiblement verticale à une position de débarquement du module, sensiblement horizontale.

6. Dispositif d'embarquement et de débarquement d'un module mobile selon l'une des revendications précédentes, **caractérisé en ce qu'**il est intégré sous le véhicule.

7. Dispositif d'embarquement et de débarquement d'un module mobile selon l'une des revendications 1 à 5, **caractérisé en ce qu'**il est disposé à l'arrière du véhicule.

8. Dispositif d'embarquement et de débarquement d'un module mobile selon l'une des revendications précédentes, **caractérisé en ce qu'**il comporte des moyens (21) de verrouillage assurant le maintien en position de l'enceinte (1).

9. Dispositif d'embarquement et de débarquement d'un module mobile selon l'une des revendications précédentes, **caractérisé en ce que** l'enceinte comporte une interface (6) de connexion avec le module embarqué.

10. Dispositif d'embarquement et de débarquement d'un module mobile selon l'une des revendications précédentes, **caractérisé en ce que** l'enceinte de stockage comporte des moyens (5) de maintien du module mobile (25).

## Claims

1. Device to load and off-load a remotely controllable mobile module from a vehicle, ***wherein*** it incorporates a storage bay (1) for the module arranged to the exterior of the vehicle and means (8, 9, 10) to support and displace the bay (1) that are integral with the body (15) of the vehicle and enable the bay (1) to be moved between a transport position and an off-loading position of the module (25), the storage bay being made in the form of a parallelepipedic case or else in the form of a flat-bed housed in a caisson incorporating a base (2) oriented to the exterior of the vehicle when the storage bay is in its transport position, said base (2) incorporating protective armouring against attacks by blast-effect type mines or projectiles.

2. A device to load and off-load a mobile module according to Claim 1, wherein the means to support and displace the bay are mobile arms (8, 9) and at least one jack (10).

3. A device to load and off-load a mobile module according to Claim 2, wherein one end of the mobile arms (8, 9) is linked to the body (15) of the vehicle by means of a pivot (13; 14) or a ball joint and in that the other end (16) of the mobile arms (8, 9) is linked to the storage bay (1) by means of a pivot (17; 20) or a ball joint.

4. A device to load and off-load a mobile module according to Claim 3, wherein the means to displace the bay are arms arranged "in a parallelogram" so as to maintain the bay in a substantially horizontal position during its displacement.

5. A device to load and off-load a mobile module according to Claim 3, wherein the means to displace the bay are arms (8, 9) arranged in a "Y" so as to displace the bay from a substantially vertical transport position to a substantially horizontal off-loading position for the module.

6. A device to load and off-load a mobile module according to one of the previous Claims, wherein it is integrated under the vehicle.

7. A device to load and off-load a mobile module according to one of Claims 1 to 5, wherein it is arranged to the rear of the vehicle.

8. A device to load and off-load a mobile module according to one of the previous Claims, wherein it incorporates locking means (21) to ensure that the bay (1) is held in position.

9. A device to load and off-load a mobile module according to one of the previous Claims, wherein the bay incorporates an interface (6) to connect it with the module on board.

10. A device to load and off-load a mobile module according to one of the previous Claims, wherein the storage bay incorporates means (5) to hold the mobile module (25).

## Patentansprüche

1. Vorrichtung zum Verladen und Entladen eines beweglichen Moduls, das von einem Fahrzeug aus fernbedienbar ist, ***dadurch gekennzeichnet, dass*** sie einen Behälter zur Lagerung (1) des im Inneren des Fahrzeugs angeordneten Moduls und Mittel (8, 9, 10) zum Halten und Bewegen des Behälters (1) umfasst, die fest mit der Karosserie (15) des Fahrzeugs verbunden sind und es ermöglichen, den Behälter (1) zwischen einer Position zum Transport und einer Position zur Entladung des Moduls (25) zu bewegen, wobei der Lagerbehälter in der Form eines parallelepipedischen Gehäuses oder auch in der Form einer Platte ausgeführt ist, die sich in einem Kasten befinden, indem er einen Boden (2) umfasst, der zur Außenseite des Fahrzeuges gerichtet ist, wenn der Behälter sich in Transportposition befindet, wobei der genannte Boden (2) eine Schutzpanzerung gegen die Angriffe vom Typ Luftdruck- oder Splittermine umfasst.

2. Vorrichtung zum Verladen und Entladen eines beweglichen Moduls nach Anspruch 1, **dadurch gekennzeichnet, dass** die Mittel zum Halten und Bewegen des Behälters bewegliche Arme (8, 9) und wenigstens ein Zylinder (10) sind.

3. Vorrichtung zum Verladen und Entladen eines beweglichen Moduls nach Anspruch 2, **dadurch gekennzeichnet, dass** ein Ende der beweglichen Arme (8, 9) mit der Karosserie (15) des Fahrzeugs mittels eines Drehgelenks (13; 14) oder eines Kugelgelenks verbunden ist, und dass das andere Ende (16) der beweglichen Arme (8, 9) mit dem Lagerbehälter (1) mittels eines Drehgelenks (17, 20) oder eines Kugelgelenks verbunden ist.

4. Vorrichtung zum Verladen und Entladen eines beweglichen Moduls nach Anspruch 3, **dadurch gekennzeichnet, dass** die Mittel zum Bewegen des Behälters Arme sind, die "im Parallelogramm" angeordnet sind, um den Behälter in einer im wesentlichen horizontalen Position bei dessen Bewegen zu halten.

5. Vorrichtung zum Verladen und Entladen eines beweglichen Moduls nach Anspruch 3, **dadurch gekennzeichnet, dass** die Mittel zum Bewegen des Behälters Arme (8, 9) sind, die "in Y" angeordnet sind, um den Behälter von einer im wesentlichen vertikalen Transportposition in eine im wesentlichen horizontale Entladeposition zu bewegen.

6. Vorrichtung zum Verladen und Entladen eines beweglichen Moduls nach einem der vorhergehenden Ansprüche, **dadurch gekennzeichnet, dass** sie unter dem Fahrzeug integriert ist.

7. Vorrichtung zum Verladen und Entladen eines beweglichen Moduls nach einem der Ansprüche 1 bis 5, **dadurch gekennzeichnet, dass** sie im hinteren Teil des Fahrzeugs angeordnet ist.

8. Vorrichtung zum Verladen und Entladen eines beweglichen Moduls nach einem der vorhergehenden Ansprüche, **dadurch gekennzeichnet, dass** sie Verriegelungsmittel (21) umfasst, die das Festhalten des Behälters (1) in Position gewährleisten.

9. Vorrichtung zum Verladen und Entladen eines beweglichen Moduls nach einem der vorhergehenden Ansprüche, **dadurch gekennzeichnet, dass** der Behälter einen Anschluss (6) zur Verbindung mit dem verladenen Modul umfasst.

10. Vorrichtung zum Verladen und Entladen eines beweglichen Moduls nach einem der vorhergehenden Ansprüche, **dadurch gekennzeichnet, dass** der Lagerbehälter Mittel (5) zum Festhalten des beweglichen Moduls (25) umfasst.
